# FASCICULE DE BREVET EUROPEEN

(11) **EP 0 654 018 B1**
(45) Date de publication et mention de la délivrance du brevet: **05.11.1997**
(21) Numéro de dépôt: 93917854.7
(22) Date de dépôt: 05.08.1993
(51) Int. Cl.: C04B 7/13, C04B 7/34

(54) **LIANTS HYDRAULIQUES A PRISE ET DURCISSEMENT RAPIDES ET MELANGES DE LIANTS LES CONTENANT, LEUR PREPARATION ET LEUR UTILISATION POUR LA PREPARATION DE MORTIERS ET BETONS**
SCHNELLHÄRTENDE HYDRAULISCHE BINDEMITTEL UND DIESE ENTHALTENDE BINDEMISCHUNGEN, DEREN HERSTELLUNG UND VERWENDUNG ZUR HERSTELLUNG VON MÖRTEL UND BETON
QUICK-SETTING AND QUICK-HARDENING HYDRAULIC BINDERS AND MIXTURES OF BINDERS CONTAINING THEM, PREPARATION THEREOF AND UTILIZATION FOR THE PREPARATION OF MORTARS AND CONCRETES

(30) Priorité: 05.08.1992 FR 9209719
(43) Date de publication de la demande: 24.05.1995
(73) Titulaire: VICAT, F-92082 Courbevoie Paris-La Défence Cédex 13 (FR)
(72) Inventeur: PECH, Michel, F-38410 Saint Martin D'Uriage (FR); LACROIX, Henri, F-69100 Villeurbanne (FR); CIPRIANI, Martial, F-38000 Grenoble (FR); SOMMAIN, Denis, F-38300 Cullin (FR)
(74) Mandataire: Portal, Gérard
(86) Numéro de dépôt international: FR9300794
(87) Numéro de publication internationale: WO9403407

(56) Documents cités:
- GB-A- 2 051 031
- US-A- 4 921 537
- DATABASE WPI Week 9109, Derwent Publications Ltd., London, GB; AN 91-060249 & HU,A,54 089 (KOZUTI EPITO VALL) 28 Janvier 1991
- Edited by Dr. P.-C. AITCIN 'Condensed Silica Fume' , LES EDITIONS DE L'UNIVERSITE DE SHERBROOKE , SHERBROOKE,CA M.REGOURD: "Pozzolanic Reactivity of Condensed Silica Fume" voir page 20 - page 24
- DATABASE WPI Week 8721, Derwent Publications Ltd., London, GB; AN 87-145416 & HU,A,41 351 (ENERGIAGAZDALKODASI) 28 Avril 1987

## Description

La présente invention concerne de nouveaux liants hydrauliques à prise et durcissement rapides, des mélanges de liants les contenant, leur procédé de préparation et leur utilisation pour la préparation de mortiers et bétons.

On connaît déjà depuis de nombreuses années l'utilisation de pouzzolanes naturelles ou artificielles seules ou en combinaison avec différents ciments, en particulier des ciments de type PORTLAND. Parmi les pouzzolanes artificielles les plus connues, on citera notamment les cendres volantes qui se forment lors de la combustion du charbon dans les centrales thermiques, le laitier qui est un sous-produit de la fabrication de l'acier ainsi que les fumées de silice qui sont des déchets industriels de l'industrie du silicium et de ses alliages.

L'utilisation de fumée de silice trouve un développement tout particulier actuellement dans l'industrie du béton, en particulier du béton à hautes et très hautes performances.

Toutefois, à l'heure actuelle, on ne connaît aucun liant hydraulique à prise et durcissement rapides incorporant dans sa composition des produits de type pouzzolanique et plus particulièrement des fumées de silice.

Le sulfate de calcium est connu comme additif dans les ciments artificiels et permet notamment de réguler la prise des clinkers.

On connaît déjà différents liants hydrauliques à prise rapide. Il s'agit soit de ciments naturels tels qu'ils sont définis par la norme française NF P15-308, par exemple le ciment PROMPT défini par la norme NF P15-314, soit de ciments artificiels, par exemple les liants hydrauliques adjuvantés ou les mélanges alumineux de type PORTLAND.

La présente invention propose un nouveau liant hydraulique qui présente un temps de prise aussi avantageux que celui des meilleurs ciments naturels tout en ayant, par rapport à ces derniers, des propriétés mécaniques et une résistance aux agressions chimiques améliorées. Le liant de l'invention permet, par ailleurs, d'obtenir des résistances aux agressions chimiques améliorées par rapport à celles des liants incluant un ciment artificiel et des fumées de silice avec, en outre, l'avantage d'un coût d'élaboration thermique plus faible puisque l'étape de calcination est réalisée entre 900 et 1 200°C et non aux alentours de 1 450°C comme c'est le cas pour les ciments artificiels.

Par ailleurs, la demanderesse s'est aperçue que, de façon tout à fait surprenante, l'augmentation des performances liées à la présence de produits pouzzolaniques dans le liant se faisait ressentir dès les premières heures dans le cas du liant de l'invention, alors qu'elle n'est sensible qu'à partir d'environ 7 jours dans le cas des ciments artificiels de type PORTLAND.

Ainsi, la présente invention permet pour la première fois d'obtenir un liant hydraulique présentant à la fois un temps de prise rapide et des propriétés mécaniques améliorées ainsi qu'une bonne résistance aux agressions chimiques avec des coûts d'élaboration thermique plus faibles.

Par ciments à prise et durcissement rapides selon l'invention, on entend des ciments dont le début de prise à 20°C est compris entre 2 et 60 minutes, et dont le temps de fin de prise se situe 2 à 15 minutes après.

Cette définition distingue clairement ces ciments à prise et durcissement rapides des ciments classiques tels qu'ils sont définis dans la norme NF P15-301 qui indique au paragraphe 7-2.2 que les temps de début de prise à 20°C sont supérieurs à 1 h 30 min pour les ciments des classes 35 et 45, et supérieurs à 1 h pour les ciments des classes 55 et H.P.

Selon une de ses caractéristiques essentielles, l'invention concerne un liant hydraulique à prise et durcissement rapides, caractérisé en ce qu'il contient 50 à 99 % d'un ciment naturel résultant de la calcination à une température de 900 à 1 200°C d'une seule et même matière première renfermant des phases argileuses sulfurées et du carbonate de calcium en mélange intime et de 1 à 50 % d'un produit pouzzolanique.

La température de calcination de la matière première constituant le ciment naturel est telle qu'elle conduit à un produit ne contenant pas majoritairement la phase caractéristique des clinkers que l'on retrouve dans les ciments artificiels, notamment le ciment de type PORTLAND.

Par produit de type pouzzolanique, on entend des produits susceptibles de former avec la chaux des silicates de calcium hydratés similaires à ceux produits lors de l'hydratation d'un clinker de ciment artificiel classique.

A titre d'exemple de produits pouzzolaniques utilisables pour préparer les compositions selon l'invention, on citera les pouzzolanes naturelles, par exemple les pouzzolanes volcaniques, les pouzzolanes artificielles, par exemple des argiles activées thermiquement et de façon tout à fait avantageuse des déchets industriels et tout particulièrement les fumées de silice. Ces fumées de silice sont des déchets industriels issus de la fabrication de l'aluminium et sont composées pour l'essentiel de grains de silice amorphe de dimensions inférieures au micron. Elles présentent l'avantage de jouer à la fois le rôle de filler et de produit pouzzolanique.

Selon une autre caractéristique avantageuse de l'invention, les liants hydrauliques de l'invention contiennent en outre 0 à 10 % d'un ajout minéral inorganique de type sulfate.

A titre d'exemple de sulfates utilisables selon l'invention, on citera le sulfate de calcium, anhydre ou dihydraté, le sulfate double de sodium et de calcium (glaubérite).

L'addition de dérivés sulfatés s'avère tout particulièrement avantageuse dans les liants de la présente invention du fait de la présence dans la matière première les constituant d'éléments sulfurés qui, au moment de l'hydratation, se combinent aux dérivés sulfatés pour former des hydrates spécifiques.

Selon d'autres variantes avantageuses de l'invention, les compositions de liant hydraulique contiennent, en outre, jusqu'à 5 % d'ajouts organiques destinés à améliorer l'hydratation dudit liant lors de son utilisation.

A titre d'exemples de tels ajduts organiques, on citera tout particulièrement les produits classiquement utilisés pour modifier la rhéologie et/ou la quantité d'eau nécessaire à la maniabilité et/ou la cinétique de prise et/ou de durcissement.

A titre d'exemples de tels adjuvants organiques on citera :
- les lignosulfonates,
- les gluconates,
- le naphtalène,
- la mélamine,
- les produits polyhydroxycarboxyliques,
- les produits polyvinylsulfonés,
- l'acide citrique anhydre ou monohydraté,
- d'une façon générale les produits classiquement utilisés comme plastifiants ou superplastifiants.

Des exemples de liants hydrauliques particulièrement avantageux selon l'invention correspondent aux compositions suivantes exprimées en pourcentages en poids :
- - ciment naturel: : 85 - 95 %
- - produit pouzzolanique: : 3,9 - 11,5 %
- - ajout inorganique: : 1 - 10 %
- - ajout organique: : 0,1 - 0,5 %

Les constituants de la composition de liant hydraulique selon l'invention sont à l'état sec sous forme d'un mélange de particules de diamètres compris entre 0 et 200 µm (microns), avantageusement entre 0 et 100 µm (microns).

Selon une autre caractéristique de l'invention, elle concerne un procédé de préparation des compositions précédemment définies.

Selon une caractéristique avantageuse du procédé de l'invention, le mélange et le broyage des particules sont faits simultanément.

Ainsi, le ciment calciné en provenance du four de calcination est avantageusement mélangé à sec avec le produit pouzzolanique et éventuellement des adjuvants, et introduit dans un broyeur, par exemple de type à boulets ou à barre où le mélange est broyé et homogénéisé.

Comme on l'a vu précédemment, les liants hydrauliques de l'invention réunissent pour la première fois différents avantages jusqu'à présent non réalisés simultanément ; en particulier, une prise et un durcissement rapides, une résistance mécanique élevée à court terme et progressant régulièrement au cours du temps sur plusieurs années et une excellente résistance aux agressions chimiques.

Ainsi, à température ordinaire de 20°C, les liants organiques de l'invention conduisent, pour des mortiers 1/1 à des temps de début de prise de l'ordre de 6 min et de fin de prise de l'ordre de 9 min.

Les temps de début de prise pourront être augmentés si besoin est, selon une technique connue de l'homme du métier, par exemple, par adjonction d'acide citrique dans l'eau de gâchage. Ainsi, l'addition de 0,2, 0,4, 0,6 ou 0,8 % d'acide citrique permettra d'augmenter le temps de début de prise à 20°C respectivement de 10, 15, 25 ou 30 min.

Les liants hydrauliques de l'invention permettent d'obtenir des mortiers 1/1 qui présentent dès le premier quart d'heure des résistances élevées de l'ordre de 7 MPa en compression et de 1,8 MPa en flexion et qui évoluent progressivement dans le temps.

Ainsi pour des mortiers 1/1 en poids et un dosage eau/liant hydraulique compris entre 0,30 et 0,38, on obtient des résistances à la compression de :
- 8 à 40 MPa au bout de 1 h,
- 15 à 50 MPa au bout de 24 h,
- 35 à 75 MPa au bout de 28 j.

Par ailleurs, les liants hydrauliques de l'invention conduisent à des mortiers et bétons d'excellente résistance aux attaques chimiques. A titre d'exemple, une éprouvette immergée pendant un an dans de l'acide lactique à pH = 4 perd moins de 1 % de son poids.

La demanderesse s'est également aperçue que les liants hydrauliques de l'invention présentaient l'avantage de donner avec les ciments artificiels ou leurs clinkers de type PORTLAND des mélanges entièrement compatibles et stables dans le temps.

Ces mélanges peuvent contenir de 0,1 à 99,9% de liant hydraulique de l'invention.

Ces mélanges présentent l'avantage de fournir un moyen de moduler à volonté les propriétés mécaniques et la vitesse de prise des produits ainsi obtenus.

Ainsi les nouveaux liants obtenus par mélange des liants hydrauliques selon l'invention avec des ciments artificiels ont, à des dosages supérieurs à 30% (en mortier 1/2 par exemple), des propriétés de prise et de résistances mécaniques intermédiaires et progressives entre les propriétés des liants de l'invention décrits précédemment et celles du ciment artificiel, c'est-à-dire qu'à certains dosages on peut avoir une prise rapide, des résistances mécaniques mesurables dès 3 h et des résistances à 28 jours égales à celles du ciment artificiel.

Les résistances mécaniques continuent de monter de manière significative jusqu'à 3 mois et plus.

Selon un autre aspect de l'invention, elle concerne également l'utilisation des liants hydrauliques selon l'invention pour la préparation de mortiers et bétons, ainsi que lesdits mortiers et bétons en résultant.

Des mélanges particulièrement intéressants sont les mélanges avec les ciments à forts ajouts de matériaux pouzzolaniques, ciments au laitier ou à la pouzzolane.

Ces ciments ont de par leur nature même des résistances mécaniques très faibles au jeune âge. Leurs mélanges avec les liants selon l'invention améliorent très nettement leurs résistances mécaniques au jeune âge, dès 3 h et jusqu'à 6 jours suivant le dosage considéré.

Ainsi l'invention fournit un moyen puissant pour accélérer le durcissement de ces ciments tout en gardant les mêmes qualités de résistance aux agressions chimiques.

Ainsi l'invention concerne donc selon un de ces autres aspects les mélanges comprenant de 10 à 90% du liant hydraulique constituant la base de l'invention avec un ciment artificiel ou de ses clinkers du type PORTLAND. L'influence du liant selon l'invention concerne le temps de prise du mélange.

L'invention concerne également la préparation de mortiers et de bétons par les procédés habituels à partir des mélanges décrits précédemment ainsi que lesdits mortiers et béton en résultant.

## Revendications

1. Liant hydraulique, à prise et durcissement rapides, caractérisé en ce qu'il contient de 50 à 99 % d'un ciment naturel résultant de la calcination à une température de 900 à 1 200 °C d'une seule et même matière première renfermant des phases argileuses sulfurées et du carbonate de calcium en mélange intime et de 1 à 50 % d'un produit pouzzolanique.

2. Liant selon la revendication 1, caractérisé en ce que le produit pouzzolanique est issu de la récupération d'un déchet industriel ou de la fabrication d'une pouzzolane artificielle.

3. Liant selon l'une des revendications 1 ou 2, caractérisé en ce que le dérivé pouzzolanique est composé de fumées de silice, constituées de grains de silice amorphe de dimension inférieure à 1 µm (micron).

4. Liant selon l'une des revendications 1 à 3, caractérisé en ce qu'il contient 0 à 10 % d'un ajout minéral inorganique de type sulfate.

5. Liant selon la revendication 4, caractérisé en ce que l'ajout de type sulfate est un sulfate de calcium anhydre ou dihydraté ou un sulfate double de sodium et calcium.

6. Liant selon l'une des revendications 1 à 5, caractérisé en ce qu'il contient en outre moins de 5% d'un ajout organique destiné à améliorer l'hydratation dudit liant lors de son utilisation.

7. Liant organique selon la revendication 6, caractérisé en ce que ledit ajout organique appartient au groupe constitué des lignosulfonates, des gluconates, du naphtalène, de la mélamine, des produits polyhydroxycarboxyliques, des produits polyvinylsulfonés, de l'acide citrique anhydre ou monohydraté, des plastifiants et superplastifiants.

8. Liant hydraulique selon l'une des revendications 1 à 7, caractérisé en ce qu'il contient en pourcentages en poids :
ciment naturel : 85 - 95 %
produit pouzzolanique : 3,9 - 11,5 %
ajout inorganique : 1 - 10 %
ajout organique : 0,1 - 0,5 %.

9. Procédé de préparation d'un liant selon l'une des revendications 1 à 8, caractérisé en ce qu'il consiste à mélanger à sec le ciment naturel résultant d'une étape de calcination réalisée entre 900 et 1 200°C et les autres ingrédients et à réaliser simultanément dans un broyeur l'étape de broyage et de mélange desdits constituants.

10. Mélange contenant 10 à 90 % d'un liant selon l'une des revendications 1 à 8 ou résultant du procédé selon la revendication 9 avec un ciment artificiel ou ses clinkers de type PORTLAND.

11. Mélange selon la revendication 10, caractérisé en ce que ledit ciment artificiel est un ciment à fort ajout de matériaux pouzzolaniques, par exemple un ciment au laitier ou à la pouzzolane.

12. Utilisation des liants hydrauliques selon l'une des revendications 1 à 8 ou résultant du procédé selon la revendication 9 ainsi que des mélanges selon l'une des revendications 10 ou 11 pour la préparation de mortiers ou bétons.

## Claims

1. Quick-setting and quick-hardening hydraulic binder, characterised in that it contains 50 to 99% of a natural cement resulting from the calcination, at a temperature of 900 to 1,200°C, of a sole and same starting material containing sulphured argillaceous phases and calcium carbonate in an intimate mixture, and 1 to 50% of a pozzolanic product.

2. Binder according to claim 1, characterised in that the pouzzolanic product is derived from the recovery of industrial waste or from the manufacture of an artificial pouzzolane.

3. Binder according to one of claims 1 or 2, characterised in that the pouzzolanic derivative is composed of silica fumes which are constituted of amorphous silica grains of dimensions lower than 1 µm (micron).

4. Binder according to one of claims 1 to 3, characterised in that it contains 0 to 10% of a inorganic mineral additive of the sulphate type.

5. Binder according to claim 4, characterised in that the sulphate-type additive is an anhydrous or dihydrated calcium sulphate or a sodium calcium double sulphate.

6. Binder according to one of claims 1 to 5, characterised in that it further contains less than 5% of an organic additive intended for improving the hydration of said binder during its use.

7. Organic binder according to claim 6, characterised in that said organic additive belongs to the group consisting of lignosulphonates, gluconates, naphthalene, melamine, polyhydroxycarboxylic products, polyvinylsulphone products, anhydrous or monohydrated citric acid, plasticisers, and superplasticisers.

8. Hydraulic binder according to one of claims 1 to7, characterised in that it contains, in percentages by weight:
natural cement: 85 - 95%
pouzzolanic product 3.9 - 11.5%
inorganic additive: 1 - 10%
organic additive: 0.1 - 0.5%.

9. Method of preparing a binder according to one of claims 1 to 8, characterised in that it consists in dry mixing the natural cement resulting from a calcination step carried out between 900 and 1,200°C and the other ingredients, and in simultaneously carrying out, in a crusher, the crushing step and the mixing step of said constituents.

10. Mixture containing 10 to 90% of a binder according to one of claims 1 to 8, or resulting from the method according to claim 9 with an artificial cement or its clinkers of the Portland type.

11. Mixture according to claim 10, characterised in that said artificial cement is a cement with a high content of pouzzolanic materials, for example a pouzzolaic cement or a slag cement.

12. Use of the hydraulic binders according to one of claims 1 to 8, or resulting from the method according to claim 9, as well as mixtures according to one of claims 10 to 11, for the preparation of mortars or concretes.

## Patentansprüche

1. Hydraulisches Bindemittel mit schnellem Abbinde- und Aushärtungsvermögen, dadurch gekennzeichnet, daß es enthält
50 bis 99 % eines natürlichen Zements, wie er bei der Calcinierung ein und desselben Ausgangsmaterials, das sulfurierte Tonphasen enthält, in innigem Gemisch mit Calciumcarbonat bei einer Temperatur von 900 bis 1200°C erhalten wird, und
1 bis 50 % eines Puzzolan-Produkts.

2. Bindemittel nach Anspruch 1, dadurch gekennzeichnet, daß das Puzzolan-Produkt aus der Aufarbeitung von Industrieabfall oder aus der Herstellung eines künstlichen Puzzolans stammt.

3. Bindemittel nach einem der Ansprüche 1 oder 2, dadurch gekennzeichnet, daß das Puzzolan-Derivat besteht aus Siliciumdioxid-Rauchgasen, die aus amorphen Siliciumdioxid-Körnern mit einer Dimension von < 1 µm (Mikron) bestehen.

4. Bindemittel nach einem der Ansprüche 1 bis 3, dadurch gekennzeichnet, daß es 0 bis 10 % eines anorganischen mineralischen Zusatzes vom Sulfat-Typ enthält.

5. Bindemittel nach Anspruch 4, dadurch gekennzeichnet, daß der Zusatz vom Sulfat-Typ ein wasserfreies oder dihydratisiertes Calciumsulfat oder ein Natriumcalciumdoppelsulfat ist.

6. Bindemittel nach einem der Ansprüche 1 bis 5, dadurch gekennzeichnet, daß es außerdem weniger als 5 % eines organischen Zusatzes zur Verbesserung der Hydratation des genannten Bindemittels bei seiner Verwendung enthält.

7. Organisches Bindemittel nach Anspruch 6, dadurch gekennzeichnet daß der organische Zusatz zu einer Gruppe gehört, die besteht aus Lignosulfonaten, Gluconaten, Naphthalin, Melamin, Polyhdroxycarbonsäureprodukten, Polyvinylsulfonprodukten, wasserfreier oder monohydratisierter Zitronensäure, Weichmachern und Superweichmachern.

8. Hydraulisches Bindemittel nach einem der Ansprüche 1 bis 7, dadurch gekennzeichnet, daß es in Gewichtsprozent enthält:
85 bis 95 % natürlichen Zement
3,9 bis 11,5 % Puzzolan-Produkt
1 bis 10 % anorganischen Zusatz
0,1 bis 0,5 % organischen Zusatz.

9. Verfahren zur Herstellung eines Bindemittels nach einem der Ansprüche 1 bis 8, dadurch gekennzeichnet, daß man den natürlichen Zement, der aus einer zwischen 900 und 1200°C durchgeführten Calcinierungsstufe stammt, und die übrigen Komponenten trocken miteinander mischt und in einer Zerkleinerungseinrichtung (Mühle) die genannten Bestandteile gleichzeitig mahlt und mischt.

10. Mischung, die 10 bis 90 % eines Bindemittels nach einem der Ansprüche 1 bis 8 enthält oder bei dem Verfahren nach Anspruch 9 erhalten wird, mit einem künstlichen Zement oder seinen Klinkern vom Portland-Typ.

11. Mischung nach Anspruch 10, dadurch gekennzeichnet, daß der genannte künstliche Zement ein Zement mit einem hohen Zusatz an Puzzolan-Materialien, wie ein Schlackenzement, oder an Puzzolan, ist.

12. Verwendung der hydraulischen Bindemittel nach einem der Ansprüche 1 bis 8 oder wie sie bei dem Verfahren nach Anspruch 9 erhalten werden, sowie der Mischungen nach einem der Ansprüche 10 oder 11 zur Herstellung von Mörtel oder Beton.
